# EUROPEAN PATENT APPLICATION

(11) **EP 4 755 895 A1**
(43) Date of publication of application: **10.06.2026**
(21) Application number: 24849194.6
(22) Date of filing: 31.07.2024
(51) Int. Cl.: C07F 7/21, C08G 77/60

(54) **METHOD FOR PRODUCING CYCLIC SILANE COMPOUND**

(30) Priority: 03.08.2023 JP 2023127054
(71) Applicant: Kureha Corporation, Chuo-ku Tokyo 103-8552 (JP)
(72) Inventor: KOBAYASHI, Yuto, Tokyo 103-8552 (JP); YAMASHITA, Yoshiki, Tokyo 103-8552 (JP); NAITO, Ryota, Tokyo 103-8552 (JP)
(74) Representative: Zimmermann & Partner Patentanwälte mbB
(86) International application number: PCT/JP2024/027269
(87) International publication number: WO 2025/028549

(57) **Abstract**

The method for producing a cyclic silane compound includes: a first step of obtaining a reaction liquid containing a chain polysilane compound by subjecting a silane compound to a polymerization reaction in a mixture containing metallic sodium and an aromatic hydrocarbon solvent; and a second step of obtaining the cyclic silane compound by subjecting the chain polysilane compound to a decomposition reaction in a solution obtained by mixing a polycyclic aromatic hydrocarbon or a polyphenyl hydrocarbon and tetrahydrofuran in the reaction liquid.

## Description

### TECHNICAL FIELD

The present invention relates to a method for producing a cyclic silane compound.

### BACKGROUND ART

A silicon carbide fiber is a fiber having excellent heat resistance and oxidation resistance even in high temperature atmosphere at a thousand and several hundred degrees Celsius. These properties are utilized, and the silicon carbide fiber is expected to be applied in the nuclear and aerospace fields.

The silicon carbide fiber can be obtained by spinning, infusibilizing and pyrolyzing an organosilicon polymer compound such as polycarbosilane, which is a precursor. Because a silicon carbide fiber containing oxygen decomposes at a high temperature, to obtain a silicon carbide fiber having extreme heat resistance, incorporation of oxygen atoms into the organosilicon polymer compound constituting the fiber needs to be inhibited. Therefore, the silicon carbide fiber having extreme heat resistance is produced by using an organosilicon polymer compound having a low oxygen content and by employing a method that does not incorporate oxygen at the time of infusibilization. A polycarbosilane with an oxygen content of approximately 0.1 wt% can be produced from a cyclic silane compound, such as dodecamethylcyclohexasilane. Thus, a cyclic silane compound is useful as a raw material for an organosilicon polymer compound, which serves as a precursor of a silicon carbide fiber.

Various methods have been known as a method for producing a cyclic silane compound. For example, Patent Document 1 describes a method for producing a cyclic silane compound by 1) obtaining a chain polysilane compound by a polymerization reaction after a silane monomer compound is added dropwise to a mixture of THF and a sodium dispersion in ice cooling, and then 2) heating and refluxing the chain polysilane compound by adding naphthalene.

### CITATION LIST

### PATENT DOCUMENT

Patent Document 1: JP 2019-156792 A

### SUMMARY OF INVENTION

### TECHNICAL PROBLEM

However, in the method for producing a cyclic silane compound such as the method described above, an expensive sodium dispersion is required to be used in an amount that is not less than the stoichiometric amount. Thus, a problem of high production cost exists.

Furthermore, because a sodium dispersion contains a large amount of dispersion oil for dispersing metallic sodium. The dispersion oil has a problem of causing difficulty in separation and purification because the dispersion oil is a water-insoluble organic compound and because a cyclic silane compound has a large solubility in the dispersion oil.

Because of these, separation and purification are desired to be performed easier while production cost is reduced by obtaining a cyclic silane compound in at least a predetermined yield without use of a sodium dispersion.

The present invention is completed in light of the circumstances described above, and an object of the present invention is to provide a method for producing a cyclic silane compound, the method facilitating separation and purification while reducing production cost.

### SOLUTION TO PROBLEM

The present invention relates to a method for producing a cyclic silane compound described below.
[1] A method for producing a cyclic silane compound, the method including: a first step of obtaining a reaction liquid containing a chain polysilane compound by subjecting a silane compound to a polymerization reaction in a mixture containing metallic sodium and an aromatic hydrocarbon solvent; and a second step of obtaining the cyclic silane compound by subjecting the chain polysilane compound to a decomposition reaction in a solution obtained by mixing a polycyclic aromatic hydrocarbon or a polyphenyl hydrocarbon and tetrahydrofuran in the reaction liquid.
[2] The method for producing a cyclic silane compound according to [1], where, in the second step, the solution contains the tetrahydrofuran and the aromatic hydrocarbon solvent, and a volume proportion of the tetrahydrofuran contained in the solution with respect to a total volume of the aromatic hydrocarbon solvent and the tetrahydrofuran is 75 vol% or greater and 95 vol% or less.
[3] The method for producing a cyclic silane compound according to [1] or [2], where, in the first step, the mixture is heated to a temperature not lower than a melting point of the metallic sodium.
[4] The method for producing a cyclic silane compound according to any one of [1] to [3], where the aromatic hydrocarbon solvent includes toluene, ethylbenzene, or xylene.
[5] The method for producing a cyclic silane compound according to any one of [1] to [4], where the second step is performed by heating the chain polysilane compound in the solution.
[6] The method for producing a cyclic silane compound according to [5], where a temperature of the heating is 40°C or higher and not higher than a reflux temperature.
[7] The method for producing a cyclic silane compound according to any one of [1] to [6], where, in the second step, biphenyl, anthracene, or naphthalene as the polycyclic aromatic hydrocarbon is mixed to the reaction liquid.

### ADVANTAGEOUS EFFECTS OF INVENTION

According to the present invention, there is provided a method for producing a cyclic silane compound, the method facilitating separation and purification while reducing production cost.

### DESCRIPTION OF EMBODIMENTS

The sodium dispersion (SD) described above is a mixture in which solid sodium having an average particle size of 1 µm or greater and 100 µm or less are dispersed in an electrical insulating oil and/or an aromatic hydrocarbon solvent and has a higher reactivity compared with metallic sodium. From the perspectives of reactivity and safety, the average particle size of the solid sodium in the SD is preferably 2 µm or greater and 10 µm or less, and more preferably 3 µm or greater and 5 µm or less. Examples of the electrical insulating oil include aliphatic hydrocarbons such as liquid paraffin and mineral oil.

In the present description, metallic sodium is elemental sodium and the state thereof is not particularly limited. That is, metallic sodium may be solid sodium or liquid sodium. However, in a case of solid sodium, the average particle size is greater than 100 µm.

The sodium dispersion (SD) described above is a material, in which fine particles of metallic sodium are dispersed in an electrical insulating oil and/or an aromatic hydrocarbon solvent and which has a higher reactivity than that of a block of metallic sodium. Examples of the electrical insulating oil include aliphatic hydrocarbons such as liquid paraffin and mineral oil.

As the method for synthesizing cyclic silane without using a sodium dispersion, use of a block of metallic sodium is considered in place of the sodium dispersion. However, because a block of metallic sodium has a small specific surface area, the polymerization reaction of the silane compound is less likely to progress, and the reaction yield tends to decrease.

Meanwhile, metallic sodium can be liquefied (formed into a liquid mixture) by heating metallic sodium in an aromatic hydrocarbon solvent, or the like.

Because liquid sodium tends to be finer by agitation compared with solid sodium, liquid sodium tends to have a larger specific surface area than that of solid sodium and can promote the polymerization reaction of the silane compound. That is, a cyclic silane compound can be obtained without use of a sodium dispersion by performing a first step of obtaining a chain polysilane compound by polymerizing a silane compound in a mixture of an aromatic hydrocarbon solvent and a liquid metallic sodium, and a second step of obtaining a cyclic silane compound by decomposing the chain polysilane compound in the presence of a predetermined catalyst.

Note that, from the perspective of enhancing production efficiency, the second step is desirably performed without isolating the chain polysilane compound produced in the first step (one-pot production). However, the reaction liquid obtained in the first step contains a large amount of the aromatic hydrocarbon solvent used to liquefy metallic sodium. Because the aromatic hydrocarbon solvent does not contribute to the decomposition reaction of the second step, the reaction yield tends to decrease.

Thus, according to an embodiment of the present invention, tetrahydrofuran contributing to the decomposition reaction is mixed to the reaction liquid obtained in the first step. That is, in the second step, the reactivity can be enhanced by performing a decomposition reaction of the chain polysilane compound in the solution containing the aromatic hydrocarbon solvent and tetrahydrofuran. By the procedure above, a desired reaction yield can be achieved.

The method for producing a cyclic silane compound of an embodiment of the present invention will be described in detail below.

### 1. Method for Producing Cyclic Silane Compound

As described above, the method for producing a cyclic silane compound according to an embodiment of the present invention includes:
a first step of obtaining a reaction liquid containing a chain polysilane compound by subjecting a silane compound to a polymerization reaction in a mixture containing metallic sodium and an aromatic hydrocarbon solvent; and
a second step of obtaining a cyclic silane compound by subjecting the chain polysilane compound to a decomposition reaction in a solution obtained by mixing a polycyclic aromatic hydrocarbon or a polyphenyl hydrocarbon and tetrahydrofuran in the reaction liquid.

### 1-1. Regarding First Step

A silane compound is subjected to a polymerization reaction in a mixture containing metallic sodium and an aromatic hydrocarbon solvent.

Metallic sodium contained in the mixture described above is preferably melted. The melted state means a state where metallic sodium is, for example, liquid due to heating, and is different from sodium dispersion that is a state where solid sodium in a form of particles is uniformly dispersed.

The mixture described above can be obtained by, for example, adding metallic sodium to the aromatic hydrocarbon solvent and then heating the resulting mixture to a temperature not lower than the melting point of metallic sodium (not lower than 98°C).

The mixture described above can be obtained by, for example, adding metallic sodium to the aromatic hydrocarbon solvent and then heating the resulting mixture to a temperature not lower than the melting point of sodium (not lower than 98°C). Note that, in a case where metallic sodium to be added is a liquid, melting operation of sodium can be omitted.

The form of metallic sodium to be added may be metallic sodium alone or may be a mixture of metallic sodium and a solvent. The solvent is not particularly limited and is preferably a solvent that is the same as the solvent used in the first step.

### Aromatic hydrocarbon solvent

The aromatic hydrocarbon solvent may be an aromatic hydrocarbon solvent having a boiling point higher than the melting point of metallic sodium (98°C). That is, the boiling point of the aromatic hydrocarbon solvent is more preferably 100°C or higher and 210°C or lower, and even more preferably 110°C or higher and 170°C or lower.

Examples of the aromatic hydrocarbon solvent described above include toluene, xylene, ethylbenzene, and mesitylene. Among these, from the perspectives of ease in melting metallic sodium and ease in recovery of the solvent in the production, toluene, xylene, and ethylbenzene are preferred, and toluene is more preferred.

The mixture described above may further contain an additional solvent other than those described above as necessary. Examples of the additional solvent include aliphatic hydrocarbon solvents such as heptane, octane, and decane.

The content of the aromatic hydrocarbon solvent in the mixture described above may be a degree by which the resulting chain polysilane can be adequately stirred and dispersed in the solvent. For example, the content of the aromatic hydrocarbon solvent with respect to 10 parts by mass of the silane compound in the mixture described above is preferably 1.0 part by mass or greater. When the content described above of the aromatic hydrocarbon solvent is 1.0 part by mass or greater, because the volume fraction of metallic sodium decreases, the average droplet size can be made even smaller, the specific surface area of sodium becomes larger, and the reactivity of the silane compound can be further enhanced. When the content described above of the aromatic hydrocarbon solvent is 25.0 parts by weight or less, because the concentration of the silane compound in the system becomes greater, the reaction of the second step is readily promoted. From the similar perspectives, the content of the aromatic hydrocarbon solvent with respect to 10 parts by mass of the silane compound in the mixture described above is more preferably 3.0 parts by mass or greater and 16.0 parts by mass or less.

The content of the aromatic hydrocarbon solvent with respect to 10 parts by mass of metallic sodium in the mixture described above is preferably 2.5 parts by mass or greater and 60.0 parts by mass or less, and more preferably 6.0 parts by mass or greater and 40.0 parts by mass or less.

### Metallic Sodium

Metallic sodium can function mainly as a reactant of the polymerization reaction.

The molar equivalent of metallic sodium with respect to one functional group of an alkoxy group or a halogen atom of the silane compound in the mixture described above is preferably 1.00 eq. or greater and 1.80 eq. or less. When the molar equivalent described above of metallic sodium is 1.00 eq. or greater, the polymerization reaction of the silane compound in the first step can be accelerated. When the molar equivalent described above of metallic sodium is 1.80 eq. or less, the proportion of sodium remained unreacted can be reduced. From the similar perspectives, the molar equivalent described above of metallic sodium in the mixture described above is more preferably 1.05 eq. or greater and 1.25 eq. or less.

### Silane Compound

Then, a silane compound is added to the mixture described above. The silane compound is preferably a compound represented by Formula (1) below.

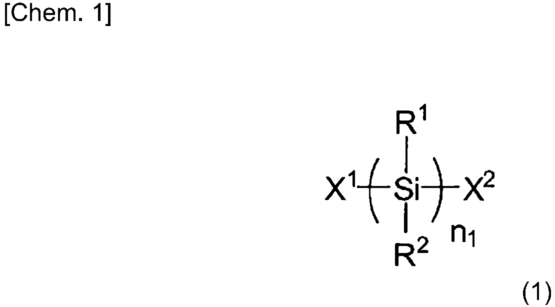

In Formula (1), X¹ and X² each represent an alkoxy group or a halogen atom. Examples of the alkoxy group include a methoxy group and an ethoxy group. Examples of the halogen atom include a chlorine atom, a bromine atom, and an iodine atom. Due to their large electronegativity difference from silicon and capability of facilitating intramolecular polarization in the silane compound, these groups or atoms are highly reactive and are substituents that function as leaving groups in reactions. Among these, from the perspective of reactivity of the silane compound, X¹ and X² are each preferably a halogen atom, and more preferably a chlorine atom.

R¹ and R² are each a hydrogen atom or a hydrocarbon group. Among these, R¹ and R² are each preferably a hydrocarbon group, more preferably an alkyl group having from 1 to 6 carbon atoms, even more preferably a methyl group or an ethyl group, and particularly preferably a methyl group.

n₁ is an integer of 1 or greater. From the perspective of enhancing reactivity of the silane compound, n₁ is preferably 1 or 2, and more preferably 1.

Examples of the compound represented by Formula (1) include dichlorodimethylsilane, dichlorodiethylsilane, dichlorodipropylsilane, dichlorodibutylsilane, dichlorodipentylsilane, dichlorodihexylsilane, dibromodimethylsilane, dibromodiethylsilane, dibromodipropylsilane, dibromodibutylsilane, dibromodipentylsilane, dibromodihexylsilane, and dichlorotetramethyldisilane. Among these, dichlorodimethylsilane is preferred. One type of the silane compound may be used, or two or more types of the silane compounds may be used.

### Polymerization Reaction

The polymerization reaction of the silane compound is preferably performed under heating from the perspective of performing the polymerization reaction with metallic sodium in a liquid state. That is, the polymerization reaction described above is preferably performed while heating is performed to a temperature not lower than the melting point of metallic sodium.

The heating temperature is preferably a temperature not lower than the melting point of sodium, more preferably 98°C or higher and not higher than the solvent reflux temperature, and even more preferably 100°C or higher and not higher than the solvent reflux temperature. The reaction described above is preferably performed in an inert gas atmosphere, such as nitrogen or argon atmosphere. Furthermore, the reaction described above is preferably performed at normal pressure or under increased pressure.

The addition of the silane compound may be performed continuously or intermittently but, from the perspective of production efficiency, is preferably performed continuously at a certain amount.

The average addition rate of the silane compound per unit amount (mol) of metallic sodium is preferably 0.06 hr⁻¹ or greater and 0.50 hr⁻¹ or less, and more preferably 0.10 hr⁻¹ or greater and 0.30 hr⁻¹ or less.

The average addition rate (mol·hr⁻¹) of a silane compound is a value determined by dividing a total amount (mol) of the silane compound used by addition time (hr). The average addition rate (hr⁻¹) of the silane compound per unit amount (mol) of metallic sodium is a value determined by dividing the average addition rate (mol·hr⁻¹) of the silane compound by an amount (mol) of metallic sodium.

When the average addition rate of the silane compound per unit amount (mol) of metallic sodium is 0.50 hr⁻¹ or less, decrease of the temperature of the mixture described above to a temperature not higher than the melting point of sodium can be further suppressed, and the reaction can be further promoted. When the average addition rate of the silane compound per unit amount (mol) of metallic sodium is 0.06 hr⁻¹ or greater, the total reaction time can be further shortened, and production efficiency can be further enhanced.

From the perspective of increasing the yield of the chain polysilane compound, after the addition of the silane compound is completed, stirring is preferably continued at the reaction temperature described above for preferably 1 hour or longer and 12 hours or less.

By the reaction described above, a reaction liquid containing a crude polydialkylsilane (chain polysilane compound) can be obtained.

### Chain Polysilane Compound

The chain polysilane compound contains a repeating unit represented by Formula (2) below.

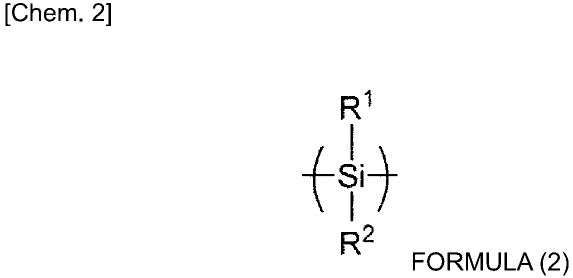

R¹ and R² in Formula (2) are the same as R¹ and R² in Formula (1).

In the chain polysilane compound, a group bonding to silicon atoms at both terminals of the molecule may be a hydrogen atom, a hydrocarbon group, an alkoxy group, a sodium atom, or a halogen atom. The alkoxy group or the halogen atom are the same as those of X¹ and X² in Formula (1). Furthermore, the sodium atom is cationized and can be coordinated by the anionized silicon atom. Since the alkoxy group and the halogen atom each have a large electronegativity difference from a silicon atom, the alkoxy group and the halogen atom are readily reduced by sodium, and can readily generate an active site. Furthermore, a sodium atom have a particularly large electronegativity difference from a silicon atom and thus can function as an active site. Thus, the groups at both terminals of the molecule of the chain polysilane compound may be alkoxy groups, halogen atoms, or sodium atoms.

The number of repeating units is not particularly limited and is, for example, an integer of 2 or greater, and preferably an integer of 6 or greater and 12000 or less.

### 1-2. Regarding Second Step

To the reaction liquid described above obtained in the first step, tetrahydrofuran and a polycyclic aromatic hydrocarbon or a polyphenyl hydrocarbon are mixed. That is, without isolating the product from the reaction liquid obtained in the first step, tetrahydrofuran and the polycyclic aromatic hydrocarbon or the polyphenyl hydrocarbon are mixed with the reaction liquid.

As described above, in only the aromatic hydrocarbon solvent contained in the reaction liquid obtained in the first step, a complex formed from sodium and the polycyclic aromatic hydrocarbon or the polyphenyl hydrocarbon, the complex being necessary for the decomposition reaction of the chain polysilane compound in the second step, is less likely to be formed, and thus the decomposition reaction of the chain polysilane compound is less likely to proceed. In contrast, because tetrahydrofuran is added to the reaction liquid, a complex of sodium with the polycyclic aromatic hydrocarbon or the polyphenyl hydrocarbon can be formed and present stably, the decomposition reactivity of the chain polysilane compound can be further enhanced.

### Tetrahydrofuran

As described above, the solution in the second step contains the aromatic hydrocarbon solvent and tetrahydrofuran. The addition amount of tetrahydrofuran is preferably an amount that makes the volume proportion of tetrahydrofuran in the solution after the addition 60 vol% or greater and 98 vol% or less with respect to the total volume of the aromatic hydrocarbon solvent and tetrahydrofuran. When the volume proportion of tetrahydrofuran is 60 vol% or greater, the decomposition reaction of the chain polysilane compound can be further promoted, and the yield of the cyclic silane compound can be further enhanced. When the volume proportion of tetrahydrofuran is 98 vol% or less, the volume proportion of the aromatic hydrocarbon solvent to metallic sodium can be made high, and thus the yield of the cyclic silane can be further enhanced because the synthesis of the chain polysilane in the first reaction can be efficiently performed.
From the similar perspectives, the addition amount of tetrahydrofuran is more preferably an amount that makes the volume proportion of tetrahydrofuran in the solution after the addition 75 vol% or greater and 98 vol% or less, and particularly preferably 75 vol% or greater and 95 vol% or less, with respect to the total volume of the aromatic hydrocarbon solvent and tetrahydrofuran.

The total volume of the aromatic hydrocarbon solvent and tetrahydrofuran contained in the solution described above is preferably 50.0 mL or greater with respect to 10 parts by mass of metallic sodium. When the total volume of the aromatic hydrocarbon solvent and tetrahydrofuran contained in the solution described above is 50.0 mL or greater with respect to 10 parts by mass of metallic sodium, decomposition of the resulting cyclic silane compound can be further suppressed. When the total volume of the aromatic hydrocarbon solvent and tetrahydrofuran contained in the solution described above is 700.0 mL or less with respect to 10 parts by mass of metallic sodium, because the concentration of the silane compound in the system becomes greater, the reaction of the second step is readily promoted. From the similar perspectives, the total volume of the aromatic hydrocarbon solvent and tetrahydrofuran contained in the solution described above is more preferably 80.0 mL or greater and 580 mL or less with respect to 10 parts by mass of metallic sodium, and particularly preferably 100 mL or greater and 560 mL or less with respect to 10 parts by mass of metallic sodium.

### Polycyclic Aromatic Hydrocarbon or Polyphenyl Hydrocarbon

The polycyclic aromatic hydrocarbon or the polyphenyl hydrocarbon can function mainly as a catalyst for the decomposition reaction of the chain polysilane compound. One of the polycyclic aromatic hydrocarbon and the polyphenyl hydrocarbon may be mixed with the reaction liquid described above, or both may be mixed with the reaction liquid described above.

The polycyclic aromatic hydrocarbon or the polyphenyl hydrocarbon preferably forms a complex with sodium. The polycyclic aromatic hydrocarbon is a hydrocarbon compound containing two or more aromatic rings that are condensed. The polyphenyl hydrocarbon is a hydrocarbon compound containing two or more aromatic rings that are bonded by a single bond. Because π electrons of the plurality of aromatic rings are conjugated, the complex formed from these compounds can function as a reductant. Because of this, it is presumed that the decomposition reaction is promoted by cleavage of the silicon-silicon bond of the chain polysilane compound or the bond between a functional group and the silicon of the chain polysilane terminal. The complex formed from sodium and the polycyclic aromatic hydrocarbon or the polyphenyl hydrocarbon is preferably formed in the presence of tetrahydrofuran.

Examples of the polycyclic aromatic hydrocarbon described above include naphthalene, anthracene, and phenanthrene. Examples of the polyphenyl aromatic hydrocarbon include biphenyl and terphenyl. Among these, from the perspective of further promoting the decomposition reaction, biphenyl, naphthalene, and anthracene are preferred, and naphthalene and biphenyl are more preferred.

The total molar equivalent of the polycyclic aromatic hydrocarbon and the polyphenyl hydrocarbon in the solution described above with respect to the silicon atoms of the charged silane compound (monomer) is preferably 0.01 eq. or greater and 0.50 eq. or less. When the total molar equivalent described above of the polycyclic aromatic hydrocarbon and the polyphenyl hydrocarbon is 0.01 eq. or greater, the decomposition reaction of the chain polysilane compound is readily further promoted, and the yield of the cyclic silane compound is readily increased. When the total molar equivalent described above of the polycyclic aromatic hydrocarbon and the polyphenyl hydrocarbon is 0.50 eq. or less, decomposition of the resulting cyclic silane compound can be further suppressed. From the similar perspectives, the total molar equivalent described above of the polycyclic aromatic hydrocarbon and the polyphenyl hydrocarbon is more preferably 0.04 eq. or greater and 0.32 eq. or less, even more preferably 0.06 eq. or greater and 0.20 eq. or less, and particularly preferably 0.08 eq. or greater and 0.16 eq. or less.

### Addition and Mixing

The order of mixing the reaction liquid with the polycyclic aromatic hydrocarbon or the polyphenyl hydrocarbon, and tetrahydrofuran is not particularly limited. The polycyclic aromatic hydrocarbon or the polyphenyl hydrocarbon, and tetrahydrofuran may be simultaneously added to the reaction liquid described above. Alternatively, after tetrahydrofuran is added to the reaction liquid described above and stirred, the polycyclic aromatic hydrocarbon or the polyphenyl hydrocarbon may be added. Alternatively, after the polycyclic aromatic hydrocarbon or the polyphenyl hydrocarbon is mixed with tetrahydrofuran, the reaction liquid may be added. Alternatively, after the reaction liquid is mixed with tetrahydrofuran, the polycyclic aromatic hydrocarbon or the polyphenyl hydrocarbon may be added. In the present embodiment, as an example, tetrahydrofuran is preferably further added after a reaction liquid containing the aromatic hydrocarbon solvent and the polycyclic aromatic hydrocarbon or the polyphenyl hydrocarbon is prepared by adding the polycyclic aromatic hydrocarbon or the polyphenyl hydrocarbon to the reaction liquid obtained in the first step.

### Decomposition Reaction

In the obtained solution, the chain polysilane compound is then subjected to a decomposition reaction to obtain a cyclic silane compound. The decomposition reaction may be performed at room temperature or may be performed under heating. From the perspective of achieving a higher yield of the cyclic silane compound, the decomposition reaction is preferably performed under heating, that is, while the chain polysilane compound is heated in the solution.

The heating temperature may be a temperature that is not higher than the reflux temperature and, for example, 40°C or higher, preferably 50°C or higher, and more preferably 60°C or higher. However, the upper limit of the heating temperature is preferably 200°C or lower from the perspective of suppressing decomposition of the reaction product.

The heating method is not particularly limited and, for example, may be a method in which the solution described above is placed in an atmosphere at a predetermined temperature or may be a method in which heating is performed by a heater, water bath, oil bath, electromagnetic wave, or the like.

The reaction time indicates time passed after a target reaction temperature has been reached. In a case where the reaction is performed under heating, although the reaction time also depends on the temperature of the solution, the reaction time is, for example, preferably 1 hour or longer and 35 hours or less, and more preferably 3 hours or longer and 10 hours or less.

The mechanism of the decomposition reaction is presumed as follows. An active site is generated due to change in the electronic state caused by cleavage of a bond between silicon and a group (e.g., a halogen atom) at a molecular terminal of the chain polysilane compound or a silicon-silicon bond, and the cleavage is caused by the effect of a complex formed from metallic sodium and the polycyclic aromatic hydrocarbon or the polyphenyl hydrocarbon. Thereafter, this active site causes the molecular chain to cleave at predetermined distances and form a ring, and thus a cyclic silane compound is formed.

### 1-3. Action

According to the embodiment described above, in the first step, a silane compound is subjected to a polymerization reaction in a mixture containing metallic sodium and an aromatic hydrocarbon solvent. Because metallic sodium is present in a liquid form in the mixture, the specific surface area is properly large. By the procedure above, in the first step, the polymerization reaction of the silane compound can be properly proceeded.

Furthermore, in the second step, because the decomposition reaction of the chain polysilane compound is performed in the solution containing the aromatic hydrocarbon solvent and tetrahydrofuran, catalytic activity by sodium and the complex formed from sodium and the polycyclic aromatic hydrocarbon or the polyphenyl hydrocarbon tends to be achieved, and thus the decomposition reactivity can be enhanced.

By this, the cyclic silane compound can be obtained in a good yield without use of a sodium dispersion. Therefore, separation and purification can be facilitated while the production cost is reduced.

### 2. Cyclic Silane Compound

The cyclic silane compound obtained by the method for producing a cyclic silane compound according to the present embodiment has, for example, a structure represented by Formula (3) below.

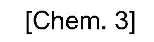

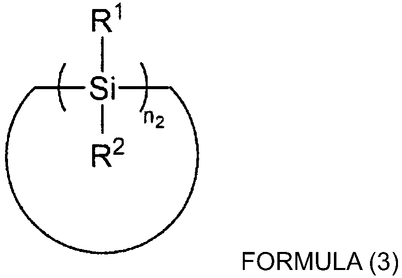

R¹ and R² of Formula (3) are identical with R¹ and R² of Formula (1), respectively.

n₂ is an integer of 3 or greater. n₂ is preferably 3 or greater and 10 or less, more preferably 5 or greater and 7 or less, and even more preferably 6.

The cyclic silane can have any structure formed from R¹ and R², and examples thereof include decamethylcyclopentasilane, dodecamethylcyclohexasilane, and tetradecamethylcycloheptasilane.

The obtained cyclic silane compound may contain a plurality of cyclic silane compounds having various n₂. The molar yield of the cyclic silane compound having n₂ of 6 (six-membered ring) is preferably 50% or greater, more preferably 60% or greater, and even more preferably 70% or greater. The yield of the cyclic silane compound can be determined by analyzing the reaction product using gas chromatography. The measurement conditions may be the same as those in Examples described below.

Furthermore, because a six-membered ring has good stability among formed cyclic silanes, the obtained cyclic silane preferably contains more six-membered rings. The selectivity of the six-membered ring is preferably 80% or greater, and more preferably 85% or greater. Note that the selectivity of the six-membered ring is a percentage value determined by dividing the molar yield (%) of the six-membered ring by total yield (%) of the cyclic silane.

### EXAMPLES

The present invention will be described more specifically below based on examples, but the present invention is not limited to these examples.

### Example 1

### (1) First Step

In a 200 mL four-neck flask purged with argon, 12 mL of toluene (aromatic hydrocarbon solvent, solvent [A]), and metallic sodium in a molar equivalent X with respect to dimethyldichlorosilane of 2.4 eq. were charged and stirred while being heated at a reflux temperature (110°C), and metallic sodium was thus melted.

Then, to the obtained mixture, 10 g of dimethyldichlorosilane (silane compound) was added dropwise for 150 minutes (average addition rate of the silane compound per unit amount (mol) of metallic sodium: 0.17 hr⁻¹), and then stirred at a reflux temperature in a range of 100°C or higher and 110°C or lower for 6 hours and reacted. By the procedure above, a reaction liquid containing a chain polysilane compound was obtained. The obtained reaction liquid was cooled to room temperature. Note that the content of toluene in the mixed solution was 10.3 parts by mass with respect to 10 parts by mass of the silane compound and was 24.0 parts by mass with respect to 10 parts by mass of metallic sodium.

### (2) Second Step

To the reaction liquid containing the chain polysilane compound described above, 60 mL of tetrahydrofuran (THF, solvent [B]) and naphthalene (polycyclic aromatic hydrocarbon) in a molar equivalent Y with respect to dimethyldichlorosilane of 0.08 eq. were added and then stirred and mixed, and thus a solution was prepared.

The obtained solution was then heated by an oil bath at the reflux temperature (71°C), and stirred and allowed for a reaction for 6 hours, resulting in a solution containing a cyclic silane compound. Note that the total volume of toluene and tetrahydrofuran in the reaction liquid with respect to 10 parts by mass of metallic sodium used in the first step described above was 167 mL, and the volume proportion of tetrahydrofuran with respect to the total volume of toluene and tetrahydrofuran was 83 vol%.

The reaction scheme of Example 1 was as follows.

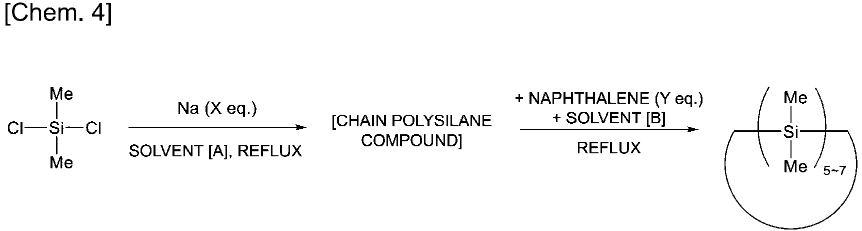

### Examples 2 to 5

Each solution containing the cyclic silane compound was obtained in the same manner as in Example 1 except for changing the charged amount of toluene in the first step and the charged amount of tetrahydrofuran (THF) added in the second step so that the volume proportion of tetrahydrofuran with respect to the total volume of toluene and tetrahydrofuran in the solution obtained in the second step became the volume proportion listed in Table 1.

### Comparative Example 1

A solution containing the cyclic silane compound was obtained in the same manner as in Example 1 except for adding toluene but not tetrahydrofuran (THF) to the reaction liquid obtained in the first step.

### Comparative Example 2

A solution containing the cyclic silane compound was obtained in the same manner as in Example 1 except for using tetrahydrofuran (THF) but not toluene in the first step.

### Comparative Example 3

A solution containing the cyclic silane compound was obtained in the same manner as in Example 1 except for adding no naphthalene in the second step.

### Examples 6 to 10

Each solution containing the cyclic silane compound was obtained in the same manner as in Example 1 except for changing the addition amount of toluene (in parts by mass with respect to 10 parts by mass of the silane compound) in the first step to the amount listed in Table 1.

### Examples 11 to 14

Each solution containing the cyclic silane compound was obtained in the same manner as in Example 2 except for changing the addition amount of naphthalene (in molar equivalent with respect to the silane compound) in the second step to the amount listed in Table 1.

### Examples 15 and 16

Each solution containing the cyclic silane compound was obtained in the same manner as in Example 1 except for replacing toluene with an aromatic hydrocarbon solvent listed in Table 1 in the first step.

### Example 17

A solution containing the cyclic silane compound was obtained in the same manner as in Example 1 except for replacing naphthalene with biphenyl in the first step.

For each of the reaction products obtained in Examples 1 to 17 and Comparative Examples 1 to 3, the reaction liquid analysis was performed using gas chromatography. The measurement conditions were as follows.

### Gas Chromatography Measurement

Instrument: GC-2025 (available from Shimadzu Corporation)
Column: DB1301 (Agilent Technologies), length (30 m), Diam. (0.320 m), Film (0.25 m)
Carrier gas: He
Detector: FID

Then, production of cyclic silane (dodecamethylcyclohexasilane (six-membered ring), decamethylcyclopentasilane (five-membered ring), tetradecamethylcycloheptasilane (seven-membered ring)) was confirmed, and the yield of each of these was determined. The results are shown in Table 1.

**[Table 1]**

| | First step | | Second step | | | | | Evaluation | | | | |
|---|---|---|---|---|---|---|---|---|---|---|---|---|
| | Solvent [A] | | Polycyclic aromatic hydrocarbon or polyphenyl hydrocarbon | | Additional solvent (solvent [B]) | Total solvent amount *3 [mL] | THF *4 [vol.%] | Yield | | | | Six-membered ring selectivity |
| | Solvent species | Content *1 [part by mass] | Chemical species | Molar equivalent *2 [eq.] | Solvent species | | | Five-membered ring [%] | Six-membered ring [%] | Seven-membered ring [%] | Total [%] | |
| Example 1 | Toluene | 24.0 | Naphthalene | 0.08 | THF | 167 | 83 | 9 | 76 | 2 | 87 | 87% |
| Example 2 | Toluene | 24.0 | Naphthalene | 0.08 | THF | 140 | 80 | 9 | 68 | 1 | 78 | 87% |
| Example 3 | Toluene | 24.0 | Naphthalene | 0.08 | THF | 112 | 75 | 8 | 63 | 1 | 72 | 88% |
| Example 4 | Toluene | 24.0 | Naphthalene | 0.08 | THF | 84 | 67 | 7 | 50 | 1 | 58 | 86% |
| Example 5 | Toluene | 24.0 | Naphthalene | 0.08 | THF | 558 | 95 | 9 | 68 | 2 | 79 | 86% |
| Comparative Example 1 | Toluene | 24.0 | Naphthalene | 0.08 | Toluene | 167 | 0 | 2 | 1 | 0 | 3 | 33% |
| Comparative Example 2 | THF | 24.0 | Naphthalene | 0.08 | THF | 167 | 100 | 2 | 1 | 0 | 3 | 33% |
| Example 6 | Toluene | 28.8 | Naphthalene | 0.08 | THF | 167 | 80 | 9 | 68 | 1 | 78 | 87% |
| Example 7 | Toluene | 36.0 | Naphthalene | 0.08 | THF | 167 | 75 | 8 | 62 | 1 | 71 | 87% |
| Example 8 | Toluene | 48.0 | Naphthalene | 0.08 | THF | 167 | 67 | 7 | 45 | 1 | 53 | 84% |
| Example 9 | Toluene | 7.2 | Naphthalene | 0.08 | THF | 167 | 95 | 9 | 75 | 1 | 85 | 88% |
| Example 10 | Toluene | 2.9 | Naphthalene | 0.08 | THF | 167 | 98 | 5 | 33 | 1 | 38 | 86% |
| Comparative Example 3 | Toluene | 24.0 | Naphthalene | 0.00 | THF | 167 | 83 | 3 | 4 | 0 | 7 | 57% |
| Example 11 | Toluene | 12.0 | Naphthalene | 0.04 | THF | 70 | 80 | 5 | 41 | 1 | 47 | 87% |
| Example 12 | Toluene | 12.0 | Naphthalene | 0.08 | THF | 70 | 80 | 6 | 60 | 1 | 67 | 90% |
| Example 13 | Toluene | 12.0 | Naphthalene | 0.16 | THF | 70 | 80 | 5 | 46 | 1 | 52 | 88% |
| Example 14 | Toluene | 12.0 | Naphthalene | 0.32 | THF | 70 | 80 | 4 | 43 | 1 | 48 | 90% |
| Example 15 | Ethylbenzene | 24.0 | Naphthalene | 0.08 | THF | 167 | 83 | 10 | 72 | 1 | 83 | 87% |
| Example 16 | Xylene | 24.0 | Naphthalene | 0.08 | THF | 167 | 83 | 9 | 69 | 1 | 79 | 87% |
| Example 17 | Toluene | 24.0 | Biphenyl | 0.08 | THF | 167 | 83 | 7 | 42 | 1 | 50 | 84% |

| | | | | | | | | | | | | |
|---|---|---|---|---|---|---|---|---|---|---|---|---|
| *1 Content with respect to 10 parts by mass of metallic sodium *2 Molar equivalent with respect to silicon atoms of charged silane compound (monomer) *3 Total volume of aromatic hydrocarbon solvent and tetrahydrofuran with respect to 10 parts by mass of metallic sodium *4 Volume proportion of tetrahydrofuran with respect to total volume of aromatic hydrocarbon solvent and tetrahydrofuran | | | | | | | | | | | | |

As shown in Table 1, Comparative Example 1, in which the solution in the second step did not contain THF, had an extremely low total yield. Similarly, Comparative Example 2, in which the solution in the second step did not contain toluene, had an extremely low total yield. Furthermore, Comparative Example 3, in which the solution in the second step did not contain naphthalene, had an extremely low total yield.

In contrast, Examples 1 to 17, in which the solution in the second step contained the aromatic hydrocarbon solvent and THF and contained naphthalene, had an improved total yield of 38% or greater.

In particular, it was found that the total yield was even higher in a case where the volume proportion of THF with respect to the total volume of the aromatic hydrocarbon solvent and THF in the second step was 67% or greater (comparison of Examples 1 to 5).

Based on those described above, a cyclic silane compound can be obtained without use of a sodium dispersion by promoting the decomposition reaction of the chain polysilane compound by the complex formed from sodium and the polycyclic aromatic hydrocarbon or the polyphenyl hydrocarbon, by allowing the solution in the second step to contain the aromatic hydrocarbon solvent and THF, which is specifically by melting metallic sodium by toluene in the first step and then mixing THF and the polycyclic aromatic hydrocarbon or the polyphenyl hydrocarbon in the second step.

The present application claims priority to Japanese patent application No. 2023-127054 filed on August 3, 2023. The contents described in the specification of the foregoing application are all incorporated in the specification of the present application by reference.

### INDUSTRIAL APPLICABILITY

According to the present invention, there is provided a method for producing a cyclic silane compound, the method facilitating separation and purification while reducing production cost.

## Claims

1. A method for producing a cyclic silane compound,
the method comprising:
a first step of obtaining a reaction liquid containing a chain polysilane compound by subjecting a silane compound to a polymerization reaction in a mixture containing metallic sodium and an aromatic hydrocarbon solvent; and
a second step of obtaining the cyclic silane compound by subjecting the chain polysilane compound to a decomposition reaction in a solution obtained by mixing a polycyclic aromatic hydrocarbon or a polyphenyl hydrocarbon and tetrahydrofuran in the reaction liquid.

2. The method for producing a cyclic silane compound according to claim 1, wherein,
in the second step,
the solution contains the tetrahydrofuran and the aromatic hydrocarbon solvent, and
a volume proportion of the tetrahydrofuran contained in the solution with respect to a total volume of the aromatic hydrocarbon solvent and the tetrahydrofuran is 75 vol% or greater and 95 vol% or less.

3. The method for producing a cyclic silane compound according to claim 1 or 2, wherein,
in the first step,
the mixture is heated to a temperature not lower than a melting point of the metallic sodium.

4. The method for producing a cyclic silane compound according to any one of claims 1 to 3, wherein
the aromatic hydrocarbon solvent includes toluene, ethylbenzene, or xylene.

5. The method for producing a cyclic silane compound according to any one of claims 1 to 4, wherein
the second step is performed by heating the chain polysilane compound in the solution.

6. The method for producing a cyclic silane compound according to claim 5, wherein
a temperature of the heating is 40°C or higher and not higher than a reflux temperature.

7. The method for producing a cyclic silane compound according to any one of claims 1 to 6, wherein,
in the second step,
biphenyl, anthracene, or naphthalene as the polycyclic aromatic hydrocarbon is mixed to the reaction liquid.
